# EUROPÄISCHE PATENTANMELDUNG

(11) **EP 0 878 893 A1**
(43) Veröffentlichungstag der Anmeldung: **18.11.1998**
(21) Anmeldenummer: 98108889.1
(22) Anmeldetag: 15.05.1998
(51) Int. Cl.: H02K 3/28, H02K 3/12

(54) **Elektrische Maschine, insbesondere Drehstrommaschine mit gewundenen Stromleitern**

(30) Priorität: 16.05.1997 DE 19720484
(71) Anmelder: BAUMÜLLER NÜRNBERG GMBH, D-90482 Nürnberg (DE)
(72) Erfinder: Seehuber, Michael, Dr., 92318 Neumarkt i.d. Oberpfalz (DE); Sept, Helmut, 91522 Ansbach (DE); Neubauer, Wolf-Dieter, 91217 Hersbruck (DE); Brauneiser, Hans-Jürgen, 90765 Fürth (DE)
(74) Vertreter: Götz, Georg, Dipl.-Ing.

(57) **Zusammenfassung**

Elektrische Maschine, insbesondere Drehstrommaschine, in deren Ständer und/oder Läufer mittels Nuten (1,1a,1b) eine oder mehrere, stromleitende Wicklungen angelegt sind, deren eine oder mehrere Spulen mit einem Leiter mit Flachprofil aus Schmal- und Breitseiten (3,9) gebildet sind und wellen- oder mäanderförmig verlaufende Windungen aufweisen, wobei außerhalb der Nuten verlaufende Windungsabschnitte sich in mehreren Ebenen oder Etagen überkreuzende Spulen- oder Wicklungsköpfe bilden, wobei die Abschnitte der leitenden Flachprofilleiter außerhalb der Nuten mit ihren Breitseiten (9) so ausgerichtet sind, daß darüber die mehreren Spulenköpfe aufeinanderliegen können.

## Beschreibung

Die Erfindung betrifft eine elektrische Maschine, insbesondere Drehstrommaschine, in deren Ständer und/oder Läufer mittels Nuten mehrere stromführende Phasen angelegt und geführt sind, deren Stromleitungsstränge jeweils mit einem Flachprofil aus Schmal- und Breitseiten gebildet sind, die in wellen- und/oder mäanderförmigen Windungen verlaufen, wobei außerhalb der Nuten verlaufende Windungsabschnitte sich in mehreren Etagen oder Ebenen überkreuzende Spulen-oder Windungsköpfe bilden, und die sich außerhalb der Nuten befindlichen Abschnitte der leitenden Flachprofil-Stromleitungsstränge mit ihren Breitseiten so gegenüber den in den Nuten befindlichen Abschnitten verdreht sind, daß die mehreren Spulen- oder Windungsköpfe mit den Breitseiten aufeinander liegen können, und jede der Phasen wenigstens ein Flachprofil-Stromleitungsstrang zugeordnet ist. Ferner betrifft die Erfindung einen elektrischen Leiter für die mehreren Phasen einer entsprechenden elektrischen Maschine, wobei diese Phasen jeweils mit einem Leitungsstrang aus Draht mit einem im Querschnitt flachen Profil, das zwei gegenüberliegende Schmal- und Breitseiten aufweist, gebildet sind und mehrere Windungen aufweisen, deren Verlauf eine Mäander- oder Wellenform mit einer Reihe von etwa parallel neben- bzw. hintereinanderliegenden Abschnitten ergibt.

Aus der DE-Patentschrift 149 921 ist eine Ankerspule mit gleichweit vom Ankermittel abliegenden Spulenseiten bekannt, bei der einzelne Rundleiter zu einem Flachprofil mit Breit- und Schmalseiten zusammengefaßt werden. Beim Austritt aus den Läufer- oder Ständernuten findet dann eine Verdrehung der Breit-und Flachseite um 90° bezüglich der Leiter-Längsachse statt. Es wird das Ziel angestrebt, die Zuleitungen oder Klemmen der Spule so anzuordnen, daß ihre Handhabung und Verbindung mit dem Stromwender erleichtert wird, und daß ferner ein Kreuzen der einzelnen Windungen oder Leitungen der Spule vermieden wird, so wie ferner bei Anordnung der verbindenden Endteilen der Spulen an Raum zu sparen.

Aus der CH-Patentschrift 406 415 ist eine Verdrehung um die Leiter-Längsachse nicht entnehmbar. Hier geht es im wesentlichen um die Bildung eines Zentrifugallüfters, indem mittels Überlagerung von Strecken von Spulenschichten der selben Nut und einer Schleife eine Art radiale Schaufel für den Läufer einer Asynchronmaschine gebildet wird.

Auch aus der GB-Patentschrift 1 329 205, worin Verbesserungen für elektrische Linearmotoren offenbart sind, gehen Flachprofilleiter mit gegeneinander verdrehten Breitseiten nicht hervor. Der Offenbarungskern besteht darin, daß die Windungen außerhalb der Aufnahmenuten im Ständer oder Läufer einen größeren Querschnitt als die Windungen in den Nuten aufweisen. Dadurch soll eine größere Fläche für Kühlungszwecke entstehen.

In der GB-Patentschrift 1 188 515 dagegen sind rechteckige Flachprofilleiter im Zusammenhang mit dem Stator einer elektrischen Maschine offenbart. Die Flachprofilleiter sind in Nuten des Statorkerns aufgenommen. Jedoch ist von einer Verdrehung der Breitseiten um die Längsrichtung der Flachprofilleiter nicht ersichtlich.

Aus der DE-Patentschrift 699 202 ist eine Ständerwicklung für Wechselstrommaschinen bekannt, wobei Spulenwicklungen mit Flachprofilleiter verwendet werden, die eine Breitseite und eine Schmalseite aufweisen. Es existieren Leiterabschnitte, bei denen die Breitseite gegenüber den in den Ständernuten befindlichen Abschnitten um 90° verdreht sind. Allerdings werden die Flachprofilleiter in sich mehrfach schleifenartig gewickelt, wobei sie pro Schleife durch zwei voneinander entfernte Nuten geführt werden.

Wellenwicklungen sind vor allem im Anker von Gleichstrommaschinen allgemein bekannt. Sie vermeiden die Parallelschaltung der Wicklung nach Polpaaren. Bei Drehstrommaschinen, insbesondere Synchronmotoren, sind vielfach Ausführungen mit hoher Polzahl im Einsatz. Diese bedingt eine hohe Anzahl von Einzelspulen, die zu vielen Schaltverbindungen und zu großen, voluminösen Wickelköpfen führen. Andererseits ist das Motormoment proportional dem Produkt aus Stromstärke und Anzahl der stromführenden Drähte pro Nut im Läufer- oder Ständereisen der elektrischen Maschine. Mithin besteht ein beachtliches Bedürfnis nach einer elektrischen Maschine, welche sich einerseits durch ein hohes Motormoment, durch Hochpoligkeit sowie durch ein möglichst kleines, kompaktes Bauvolumen mit kleinen Wickelköpfen auszeichnet.

Zur Lösung dieser Problematik wird bei einer elektrischen Maschine mit den eingangs genannten Merkmalen erfindungsgemäß vorgeschlagen, daß die Stromleitungsstränge jeweils in einer kontinuierlichen, ebenen oder gekrümmten Fläche geführt sind, die die Nuten durchsetzen, wobei die Führungsflächen unterschiedlicher Phasen übereinander liegen. Dies kann entsprechend dem Übereinanderliegen der Spulen- oder Windungsköpfe erfolgen. Im Falle des Linearmotors ist ein ebener Verlauf der Führungsflächen für jeden Flachprofil-Stromleitungsstrang, und im Falle eines Rotationsmotors der Verlauf entlang einer kreiszylindrischen Mantelfläche angebracht. Es liegt im Rahmen der Erfindung, daß diejenigen Abschnitte der Flachprofilleiter, die außerhalb der Nuten der elektrischen Maschine verlaufen, mit ihren Breitseiten so ausgerichtet sind, daß die mehreren Spulenköpfe über diese Breitseiten aufeinanderliegen können. Damit läßt sich bei einer hohen Anzahl von Windungsdrähten für die Wicklungsköpfe eine möglichst flache Bauform bei großen Stromleitungsquerschnitten erzielen. Trotz Hochpoligkeit beispielsweise einer Synchronmaschine kann ein platzsparendes Bauvolumen im Bereich der Wicklungsköpfe gewährleistet sein. Mit der Erfindung ist die kostengünstige und in der Montage zeitsparende Möglichkeit eröffnet, jede Phase nur mit einem einzigen durchgehenden Stromleitungsstrang bzw. Flachprofilleiter zu bilden.

Nach einer besonderen Ausbildung der Erfindung verläuft die Breitseitenebene des leitenden Profilabschnitts außerhalb der Nuten etwa parallel zum Boden oder Grund der Nuten im Ständer oder Läufer. Damit wird der Vorteil erzielt, daß - bei Rotationsmaschinen - sich die einzelnen Windungen im Bereich der Wicklungsköpfe in radialer oder axialer Richtung aufeinanderlegen lassen und ein weitergehendes Abstehen vermieden ist. Eine andere vorteilhatte Ausbildung auf der Basis der Erfindung besteht darin, daß der leitende Flachprofilabschnitt, soweit er innerhalb der Maschinennut verläuft, mit seiner Breitseite etwa quer zur Nutbodenebene bzw. parallel zur Nutwandung und/oder mit seiner Schmalseite etwa parallel zur Nutbodenebene verläuft. Damit läßt sich die Nutbreite für zwei, drei, vier oder mehr parallel nebeneinander verlaufend auf dem Nutboden aufgelegte Flachprofildrähte (gegeneinander isoliert) ausnützen. Es können so in einer Schicht mehrere Spulenseiten in großer Anzahl in der Nut nebeneinander liegen. In Weiterführung dieses Gedankens ist zweckmäßig vorgesehen, daß die leitenden Flachprofilabschnitte, die innerhalb der Nuten verlaufen, und die leitenden Flachprofilabschnitte, die außerhalb der Nuten verlaufen, mit ihren Breitseiten gegeneinander um 90° verdreht sind. Mit dieser Ausbildung lassen sich aus den oben genannten Gründen einerseits flache Wickelköpfe erzielen und andererseits ein hoher Ausnutzungsgrad bzw. Ausfüllungsgrad der Nuten mit Kupfer erreichen. Die Verdrehung von Flachprofildraht, insbesondere -kupfer, um ihre Längsachse abschnittsweise jeweils um ca. 90°, so daß aufeinanderfolgende Breitseitenabschnitte mit ihren Grundebenen zueinander senkrecht stehen, läßt sich auch in der Herstellung einfach und rationell realisieren.

Im Rahmen der Erfindung, die sich auf Mehrphasenmaschinen bezieht, wobei zu jeder stromführenden Phase ein Windungsstrang gehört, ist vorteilhaft vorgesehen, daß jeder Windungsstrang mit einer Einzelspule beziehungsweise einem Flachprofil-Stromleitungsstrang mit mäanderförmigen Windungsverlauf gebildet ist. Bei der Herstellung lassen sich vorgeformte Mäanderspulen, die jeweils für eine Phase vorgesehen sind, zunächst übereinanderschichten und dann am besten gleichzeitig in die Nuten einlegen. Mit besonderem Vorteil sind vor dem Einlegen in die Nuten des Läufers oder Ständers die Stromleitungsstränge aller Phasen in sich zu einem mehrlagigen, länglichen oder ringartig geschlossenen Band zusammengepackt worden. Dieses mehrlagige Band kann bei einem Linearmotor eben oder bei einem Rotationsmotor entsprechend dem Läufer- oder Ständerumfang gekrümmt verlaufen. Denkbar ist auch die Bildung mehrerer konzentrischer Lager aufeinanderliegender Bänder. Das oder die Bänder lassen sich mit den jeweils querverlaufenden Strangabschnitten in die Nuten einlegen.

Der Vereinfachung der Herstellbarkeit dient es, wenn nach einer Ausbildung der Erfindung die eine oder mehreren mäanderartigen Spulen der Maschinenwicklung im Bereich der Spulen- bzw. Wicklungsköpfe rundlich gekrümmt verlaufen. Damit sind Schablonen oder dergleichen zur Einhaltung präziser Winkel entbehrlich.

Weitere Einzelheiten, Merkmale und Vorteile auf der Basis der Erfindung ergeben sich aus der nachfolgenden Beschreibung bevorzugter Ausführungsbeispiele der Erfindung sowie anhand der Zeichnungen. Diese zeigen in:
- Fig. 1: das Schema einer Drehstromwicklung, von dem die Erfindung ausgeht,
- Fig. 2: die erfindungsgemäße Ausbildung einer Mäanderspule in perspektivischer Ansicht,
- Fig. 3: eine Querschnittsdarstellung nach Linie III - III in Fig. 2,
- Fig. 4: eine Draufsicht auf eine erfindungsgemäße Leiteranordnung, und
- Fig. 5: eine Ansicht in Richtung V in Fig. 4.

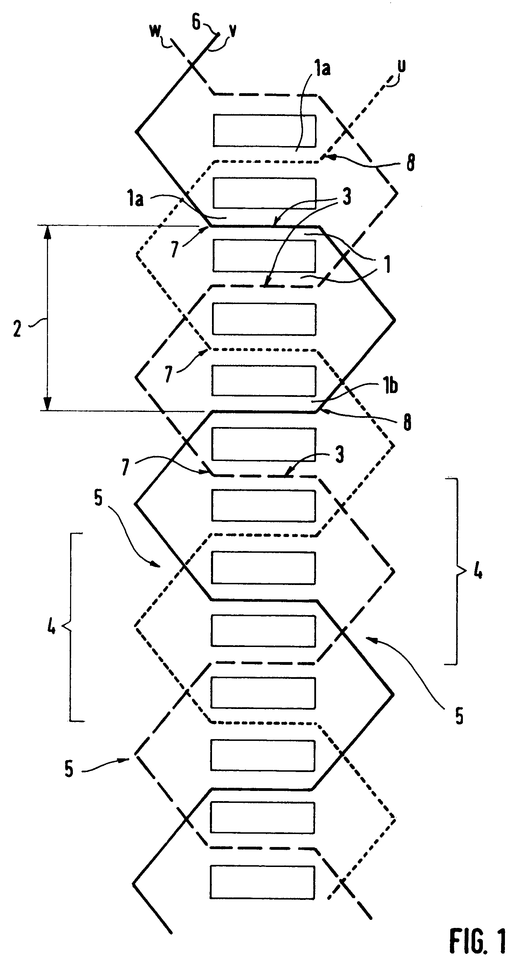

In Fig. 1 ist in der Draufsicht ein Ständer oder Läufer entweder eines elektrischen Linearmotors oder - in eben projizierter Darstellung - eines elektrischen Rotationsmotors gezeigt. Er weist eine Mehrzahl von Nuten 1 auf, die mit ihren Längsseiten nebeneinander in einer Reihe angeordnet sind, die entweder in linearer Laufrichtung oder in Rotations-Umfangsrichtung des Motors verläuft. In diese Nuten 1 sind die Spulenseiten 3 dreier Spulen oder Leitungsstränge u, v, w engelegt, die ein elektrisches Dreiphasen- oder Drehstromsystem bilden. Die Erfindung ist jedoch nicht auf Dreiphasensysteme beschränkt, sondern umfaßt auch sonstige Mehrphasensysteme.

Gemäß Fig. 1 überbrückt der Abstand 2 zwischen den jeweils in einer Nut 1 liegenden Spulenseiten 3 jeder Spule u, v, w zwei dazwischenliegende Nuten 1, die mit den Spulenseiten 3 jeweils anderer Spulen belegt sind. Die Spulenseiten 3, die in einer jeweils zugeordneten Nut 1 liegen, sind in einer Reihe zueinander parallelliegend angeordnet und außerhalb der Nuten 1 über von der Längsrichtung der Nuten 1 abweichende, nicht parallele Abschnitte 4 miteinander verbunden. Die Verbindungsabschnitte 4 unterschiedlicher Spulen u, v, w überlappen einander in Laufrichtung bzw. Rotations-Umfangsrichtung, wobei sich Bereiche 5 mit einander überkreuzenden Spulen- oder Windungsköpfen ergeben. Nach dem gezeichneten Beispiel ist in jeder Nut 1 lediglich ein Windungsabschnitt bzw. eine Spulenseite 3 abgelegt. Im Rahmen der Erfindung können aber auch mehrere Spulenseiten 3 neben- und/oder übereinander in einer Nut 1 abgelegt sein.

Gemäß Fig. 1 verlaufen die Windungen der Einzelspulen u, v, w wellen-bzw. mäanderartig, das heißt von einem Spulenanfang 6 aus wird in die erste, zugeordnete Nut 1a gekrümmt entweder im Gegenuhrzeigersinn 7 oder im Uhrzeigersinn 8 eingemündet. In die jeweils nachfolgend zugeordnete, zweite Nut 1b tritt der Spulenstrang im jeweils umgekehrten Sinn, das heißt im Uhrzeigersinn 8 bzw. im Gegenuhrzeigesinn 7 ein. Dabei verlaufen die Verbindungsabschnitte 4 jeder Spule u, v, w abwechselnd einmal auf der linken und auf der rechten Seite der Reihe mit parallelen Nuten 1.

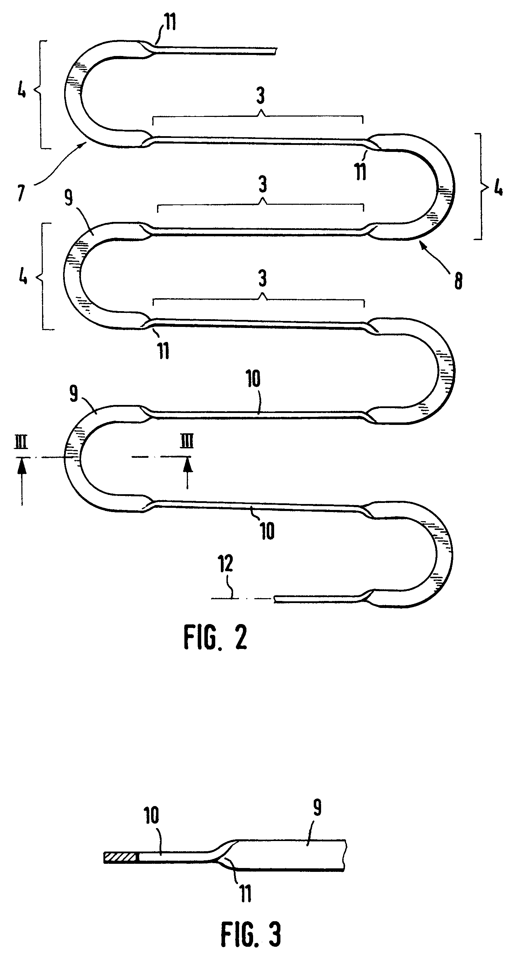

Gemäß Fig. 2 können die den Spulen- bzw. Wicklungsköpfen zugeordneten Verbindungsabschnitte 4 nicht nur eckig bzw. polygonal, sondern rundlich verlaufen. Die Spulenseiten 3 der dargestellten Wicklungsspule verlaufen zueinander annähernd parallel, weil die gebogenen bzw. gekrummten Windungsabschnitte 4 etwa einen Winkelumfang von 180° mit jeweils alternierendem Richtungssinn (Gegenuhrzeigersinn 7, Uhrzeigersinn 8) durchlaufen.

Wie insbesondere auch aus Fig. 3 ersichtlich, ist der mäander- oder wellenartig gewundene Leiter mit Flachprofildraht gebildet, dessen Querschnittsprofil durch gegenüberliegende Breitseiten 9 und gegenüberliegende Schmalseiten 10 ausgemacht ist. Da in den Übergangsstellen 11 von den (zur Aufnahme in den Nuten 1 vorgesehenen) Spulenseiten 3 zu den (zum Verlauf außerhalb der Nuten 1 vorgesehenen) Verbindungsabschnitten 4 eine Verdrehung der Spulenseiten 3 gegen den Verbindungsabschnitt 4 um etwa 90° vorgenommen ist, befinden sich in der Querschnittsdarstellung nach Fig. 3 sowohl die Breitseite 9 als auch die über die Verdreh-Übergangsstelle 11 anschließende Schmalseite 10 in einer gemeinsamen Zeichenebene. In der Realität verlaufen sie zueinander etwa parallel. Damit können die sich überkreuzenden Verbindungsabschnitte 4 unterschiedlicher Spulen u, v, w außerhalb der Nuten 1 im Bereich der Wickelköpfe 5 (vgl. Fig. 1) mit den Breitseiten flach und platzsparend aufeinanderliegen. Die Spulenseiten 3 dagegen können gleichsam hochkant in die Nut 1 eingeführt werden, so daß eine der Schmalseiten 10 unmittelbar auf dem Nutboden aufliegt. Bei Zweischichtwicklungen kann auf der entgegengesetzten Schmalseite 10 die Schmalseite einer weiteren Spulenseite eines mit Flachprofildraht gebildeten Wicklungsleiters zu liegen kommen. Während im flach abgelegten Zustand die Verbindungsabschnitte 4 mit ihren Breitseiten etwa in einer gemeinsamen Ebene liegen, verlaufen die Ebenen der Breitseiten 9 der Spulenseiten 3 in den Nuten 1 zueinander parallel bzw. sind einander zugewandt.

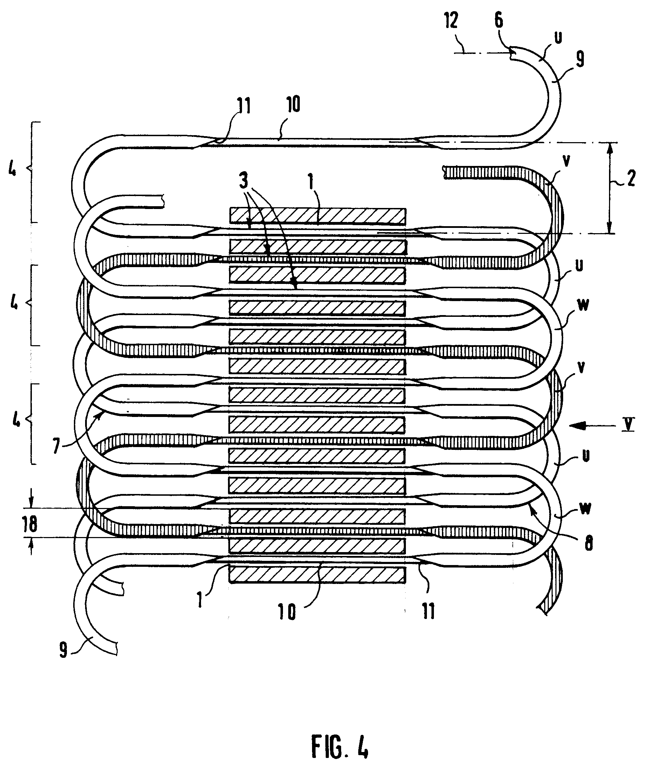

Gemäß Fig. 4 sind die Stromleitungsstränge der drei Phasen u, v, w, nachdem sie vorher zu Mäandern gemäß Fig. 2 mit der Verdrehungs- und Übergangsstelle 11 nach Fig. 3 gestaltet und entsprechend dem von den Nuten 1 vorgegebenen Raster übereinander gelegt wurden, mit ihren Spulen- bzw. Strangseiten 3 jeweils in den Nuten 1 eingelegt. Beim vorherigen Übereinanderlegen wurde darauf geachtet, dass die Abstände der Spulen- bzw. Strangseiten unterschiedlicher Phasen u, v, w mit dem Nutabstand 18 übereinstimmen. Die drei Stromleitungsstränge u, v, w können vor dem Einlegen zweckmäßig miteinander verbunden worden sein, beispielsweise durch Verbacken unter Wärmeeinwirkung. Im übrigen wird auf die Bezugsziffern verwiesen, welche dieselben Elemente wie in Fig. 1-3 bezeichnen. Die Enden bzw. Anfänge 6 der Stromleitungsstränge u, v, w können an interne Stern- oder Dreieckspunkte des Drehstromsystems oder an einen Klemmenkasten für einen Spannungsanschluß angeschlossen sein.

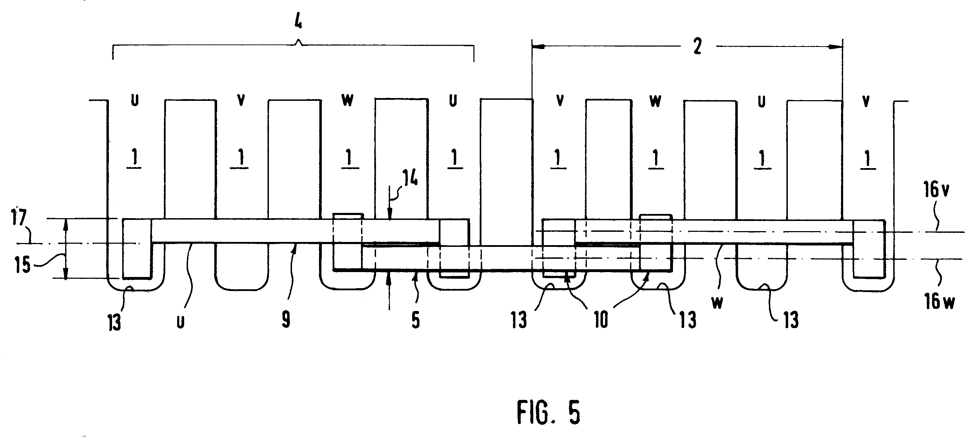

Die Fig. 5 beinhaltet eine Ansicht auf die seitlich ausladenden Spulen-oder Windungskopfbereiche 5. Zur zeichnerischen Vereinfachung sind pro Stromleitungsstrang u, v, w jeweils nur zwei Windungen angedeutet. Die Stromleitungsstränge u, v, w verlaufen außerhalb der Nuten 1 mit ihren Breitseiten 9 parallel zum Nutboden 13. Innerhalb der Nuten 1 liegen sie mit ihrer Schmalseite 10 auf dem Nutboden 13 auf. Deutlich erkennbar ist, daß außerhalb der Nuten 1 die Stromleitungsstränge u, v, w mit ihren jeweiligen Breitseiten unmittelbar übereinander liegen, wobei mehrere solcher übereinanderliegenden Stranglagen in ihrer Gesamthöhe 14, zusammengesetzt aus den Breiten zweier Schmalseiten 10, die Breite einer Breitsseite 9 eines Leitungsstrangs u, v, w nicht überschreiten. Die letztgenannte Breite bildet die Höhe 15, mit der ein Strang die Nut 1 ausfüllt. Die Stromleitungsstränge u, v, w sind im Falle des Linearmotors längs ebenen und im Falle eines Rotationsmotors längs gekrümmten Führungsflächen 16v, 16w, 17 gelegt. Im Bereich ausserhalb der Nuten 1 liegen die Führungsflächen 16v, 16w, unterschiedlicher Stromleitungsstränge u, v, w übereinander. Innerhalb der Nuten 1 sind die Stromleitungsstränge u, v, w von einer gemeinsamen Ebene durchsetzt. Im Übrigen bezeichnen mit den Fig. 1-4 übereinstimmende Bezugszeichen dieselben Elemente.

## Patentansprüche

1. Elektrische Maschine, insbesondere Drehstrommaschine, in deren Ständer und/oder Läufer mittels Nuten (1,1a,1b) mehrere stromführende Phasen (u,v,w) angelegt und geführt sind, deren Stromleitungsstränge jeweils mit einem Flachprofil aus Schmal- und Breitseiten (10,9) gebildet sind, die in wellen- und/oder mäanderförmigen Windungen verlaufen, wobei außerhalb der Nuten verlaufende Windungsabschnitte (4) sich in mehreren Ebenen oder Etagen überkreuzende Spulen- oder Windungsköpfe (5) bilden, und die sich außerhalb der Nuten (1,1a,1b) befindlichen Abschnitte (4) der leitenden Flachprofil-Stromleitungsstränge mit ihren Breitseiten (9) so gegenüber den in den Nuten (1,1a,1b) befindlichen Abschnitten (3) verdreht sind, daß die mehreren Spulen-oder Windungsköpfe (5) mit den Breitseiten (9) aufeinanderliegen können, und jeder der Phasen (u,v,w) wenigstens ein Flachprofil-Stromleitungsstrang zugeordnet ist, **dadurch gekennzeichnet, daß** die Stromleitungsstränge jeweils in einer kontinuierlichen, ebenen oder gekrümmten Fäche (16v,16w) geführt sind, die die Nuten (1) durchsetzen, wobei die Führungsflächen (16v,16w) unterschiedlicher Phasen im bereich außerhalb der Nuten (1,1a,1b) übereinander liegen.

2. Maschine nach Anspruch 1, dadurch gekennzeichnet, daß die in den Nuten (1) befindlichen Abschnitte (3) der Leiterstränge oder Phasen (u,v,w) auf einer gemeinsamen Ebene oder einer gemeinsamen, den Umfang eines Kreises bildenden Fläche (17) liegen.

3. Maschine nach Anspruch 1 oder 2, dadurch gekennzeichnet, daß in jeder Nut (1,1a,1b) eine Mehrzahl von Strangabschnitten (3), die einer gemeinsamen Phase (u,v,w) zugeordnet sind, angeordnet ist.

4. Maschine nach einem der vorangehenden Ansprüche, dadurch gekennzeichnet, daß die Windungen (4) hintereinander in einer Reihe entsprechend der Maschinen-Bewegungsrichtung und/oder mit alternierenden Krümmungen (7,8) verlaufend angeordnet sind.

5. Maschine nach einem der vorangehenden Ansprüche, dadurch gekennzeichnet, daß jede Phase (u,v,w) mit einem einstückigen, durchgehenden Stromleitungs-Strang mit Flachprofil gebildet ist.

6. Maschine nach einem der vorangehenden Ansprüche, dadurch gekennzeichnet, daß die Breitseite (9) des leitenden Flachprofilabschnitts (4) außerhalb der Nuten etwa parallel zum Nutboden (13) verläuft.

7. Maschine nach einem der vorangehenden Ansprüche, dadurch gekennzeichnet, daß der leitende Flachprofilabschnitt (3) innerhalb der Nut (1,1a,1b) mit seiner Breitseite (9) etwa quer zur Nutbodenebene (13) und/oder mit seiner Schmalseite (10) etwa parallel zur Nutbodenebene (13) verläuft.

8. Maschine nach einem der vorangehenden Ansprüche, dadurch gekennzeichnet, daß die leitenden Flachprofilabschnitte (3) innerhalb der Nuten (1,1a,1b) gegenüber den leitenden Flachprofilabschnitten (4) außerhalb der Nuten (1,1a,1b) mit ihren Breitseiten (9) jeweils um 90 Winkelgrade verdreht sind.

9. Maschine nach einem der vorangehenden Ansprüche, dadurch gekennzeichnet, daß die Windungsköpfe (5) beziehungsweise die leitenden Flachprofilabschnitte (4) außerhalb der Nuten (1,1a,1b) rundlich gekrümmt oder gebogen verlaufen.

10. Maschine nach einem der vorangehenden Ansprüche, dadurch gekennzeichnet, daß die Stromleitungsstränge aller Phasen (u,v,w) in sich zu einem mehrlagigen, länglichen und/oder ringartig geschlossenen Band verbunden sind, welches mit querverlaufenden Strangabschnitten in die Nuten (1) eingelegt ist.

11. Elektrischer Leiter für die mehreren Phasen (u,v,w) einer elektrischen Maschine nach einem der vorangehenden Ansprüche, wobei diese Phasen (u,v,w) jeweils mit einem Leitungsstrang aus Draht mit einem im Querschnitt flachen Profil, das zwei gegenüberliegende Schmal- und Breitseiten (9,10) aufweist, gebildet sind und mehrere Windungen (7,8) aufweisen, deren Verlauf eine Mäander- oder Wellenform mit einer Reihe von etwa parallel neben- beziehungsweise hintereinander liegenden Abschnitten (3) ergibt, **dadurch gekennzeichnet, daß** die parallel neben- oder hintereinander liegenden Abschnitte (3) des Leitungsstrangs gegenüber den diese verbindenden, nicht parallelen Abschnitte (4) um die Längsachse (12) des Leitungsstrangs verdreht sind, und die nichtparallelen Abschnitte (4), welche die parallelen Abschnitte (3) verbinden, mit ihren Breitseiten (9) in einer Zylinderumfangsfläche oder im flach abgewickelten oder abgelegten Zustand des Leitungsstrangs in einer Ebene (16v,16w) liegen.

12. Leiter nach Anspruch 11, dadurch gekennzeichnet, daß bei den parallel neben-oder hintereinander liegenden Abschnitten (3) deren Breitseiten (9) einander zugewandt sind.

13. Leiter nach einem der vorangehenden Ansprüche, dadurch gekennzeichnet, daß die nicht parallelen Abschnitte (4) , welche die parallelen Abschnitte verbinden, rundlich gebogen oder gekrümmt verlaufen.
